# EUROPÄISCHE PATENTSCHRIFT

(11) **EP 2 222 892 B1**
(45) Veröffentlichungstag und Bekanntmachung des Hinweises auf die Patenterteilung: **26.03.2014**
(21) Anmeldenummer: 08862750.0
(22) Anmeldetag: 09.12.2008
(51) Int. Cl.: C23C 22/68, F16C 33/62, F16C 33/64, C01G 49/08, C23C 22/62

(54) **WÄLZBEANSPRUCHTES BAUTEIL UND VERFAHREN ZUR OBERFLÄCHENBEHANDLUNG EINES WÄLZBEANSPRUCHTEN BAUTEILS**
ROLLER-STRESSED COMPONENTS AND METHOD FOR SURFACE TREATMENT OF A ROLLER-STRESSED COMPONENT
PIECE POUVANT ETRE LAMINEE ET PROCEDE DE TRAITEMENT DE SURFACE DE CE TYPE DE PIECE

(30) Priorität: 17.12.2007 DE 102007061193
(43) Veröffentlichungstag der Anmeldung: 01.09.2010
(73) Patentinhaber: AB SKF, 415 50 Göteborg (SE)
(72) Erfinder: VON SCHLEINITZ, Thilo, 97422 Schweinfurt (DE)
(74) Vertreter: Kohl, Thomas
(86) Internationale Anmeldenummer: PCT/EP2008/010430
(87) Internationale Veröffentlichungsnummer: WO 2009/077108

(56) Entgegenhaltungen:
- EP-A1- 0 105 540
- DE-B1- 1 621 509
- FR-A1- 2 654 478
- GB-A- 2 316 722
- JP-A- 2003 042 167
- US-A- 2 202 773

## Beschreibung

Die Erfindung betrifft ein wälzbeanspruchtes Bauteil mit einer Oberfläche, die wenigstens bereichsweise als eine Eisenoxidschicht ausgebildet ist. Weiterhin betrifft die Erfindung ein Verfahren zur Oberflächenbehandlung von wälzbeanspruchten Bauteilen.

Aus der DE 23 29 576 ist ein Verfahren zur Oberflächenverbesserung von Wälzkörpern bzw. -kugeln und/oder Laufbahnen von homokinetischen Gelenken bzw. Wälzlagern bekannt, bei dem die zu behandelten Gegenstände in einem wässrigen Entfettungsbad mit einem pH-Wert von 7 bis 10 entfettet werden. Anschließend erfolgt eine Spülung mit kaltem Leitungswasser und dann eine Behandlung 15 Minuten lang bei einer Temperatur von 128 °C bis 135 °C in einer gesättigten wässrigen Lösung einer Salzmischung aus 80 bis 90 Gew.% Natriumhydroxid, 5 bis 15 Gew.% Natriumnitrit und 3 bis 10 Gew.% Natriumhydrogenphosphat.

Aus der US-A-2 202 773 sind Lagerbauteile bekannt, die eine Eisenoxidschicht aus Fe₃O₄ aufweisen.

Eine Aufgabe der Erfindung ist es, im Bereich der Oberfläche eines wälzbeanspruchten Bauteils eine Eisenoxidschicht derart auszubilden, dass das Bauteil gute tribologische Eigenschaften aufweist, welche die Bedingungen in der Einlaufphase des Bauteiles günstig gestalten und die chemische Widerstandsfähigkeit sowie die Lebensdauer des Bauteiles verlängern.

Diese Aufgabe wird durch ein wälzbeanspruchtes Bauteil mit der Merkmalskombination des Anspruchs 1 gelöst.

Das erfindungsgemäße Bauteil weist eine Oberfläche auf, die wenigstens bereichsweise als eine Eisenoxidschicht ausgebildet ist, wobei die Eisenoxidschicht wenigstens 99 Gew.% Eisenoxid in Form einer Verbundstruktur mit der Summenformel Fe₃O₄ und maximal 0,5 Gew.% freies Eisenoxid der Summenformel Fe₂O₃, das kein Bestandteil der Verbundstruktur ist, enthält und flüssigkeitsdicht ausgebildet ist, und eine Dicke von maximal 2,0 µm aufweist.

Eine derart ausgebildete Eisenoxidschicht besitzt eine sehr feine gleichmäßige Struktur, ist sehr dicht und verfügt über eine hohe Resistenz gegen mechanische und chemische Einwirkungen. Demgemäß weist das Bauteil im Bereich der Eisenoxidschicht gute mechanische und chemische Eigenschaften auf. Außerdem weist das Bauteil im Bereich der Eisenoxidschicht eine niedrige Oberflächenenergie und gute Benetzungseigenschaften gegenüber Schmiermitteln auf.

Insbesondere weist das Bauteil einen geringen Verschleiß auf. Beispielsweise ergibt ein Abriebtest mit einem weißen Baumwolltuch unter hoher Kraft keinen Abrieb. Ein weiterer Vorteil besteht darin, dass das Bauteil im Bereich der Eisenoxidschicht gute tribologische Eigenschaften aufweist. Insbesondere bewirkt die Eisenoxidschicht, dass der Temperaturanstieg, der durch den mit einer Wälzbewegung in der Regel einhergehenden Gleitanteil verursacht wird, gering ausfällt. Ebenso werden Sekundärschäden der noch ungeglätteten Oberflächen beim Einlaufen der Bauteile vermieden.

Durch die flüssigkeitsdichte Ausbildung der Eisenoxidschicht ist das Bauteil vor der Einwirkung von Säuren und Laugen sowie von Phosphor- und Schwefelverbindungen geschützt, da Flüssigkeiten und die darin enthaltenen Stoffe nicht bis zum Stahl unter der Eisenoxidschicht vordringen können. Der Schutz vor einer Einwirkung von Phosphor- und Schwefelverbindungen ist insbesondere beim Einsatz des Bauteils zusammen mit einem Schmiermittel von Vorteil, da Schmiermittel mitunter Additive aufweisen, die Phosphor- und Schwefelverbindungen enthalten.

Die Zusammensetzung der Eisenoxidschicht kann beispielsweise mittels Mössbauerspektroskopie nachgewiesen werden. Die flüssigkeitsdichte Ausbildung der Eisenoxidschicht kann mittels eines Kupfersulfat-Tests nachgewiesen werden, bei dem nach einer einminütigen, in der Regel sogar nach einer fünfminütigen, Einwirkung einer 5%-Kupfersulfatlösung bei einer 10-fachen Vergrößerung noch keine rot gefärbten Bereiche erkennbar sind.

Die Eisenoxidschicht kann insbesondere so ausgebildet sein, dass sie kein freies Eisenoxid der Summenformel Fe₂O₃ enthält.

Die Verbundstruktur enthält vorzugsweise Eisenoxid der Summenformel Fe₂O₃ und Eisenoxid der Summenformel FeO in einem Stöchiometrieverhältnis von 1:1.

Das Bauteil kann als ein Wälzlagerbauteil ausgebildet sein. Insbesondere kann das Bauteil aus einem niedrig legierten Stahl gefertigt sein. Weiterhin ist es von Vorteil, wenn das Bauteil aus einem durchhärtenden Stahl gefertigt ist. Besonders geeignet ist ein Wälzlagerstahl, beispielsweise ein Stahl der Sorte 100Cr6.

Die Eisenoxidschicht weist vorzugsweise eine Dicke von maximal 1 µm, insbesondere maximal 0,75 µm, auf. Eine derart dünne Eisenoxidschicht hat den Vorteil, dass die Maßhaltigkeit des Bauteils kaum beeinträchtigt wird.

Die Eisenoxidschicht kann fein polykristallin ausgebildet sein und eine Vielzahl von Oxidationszellen aufweisen, wobei das arithmetische Mittel der Erstreckung der einzelnen Oxidationszellen senkrecht zur Oberfläche des Bauteils größer ist als das arithmetische Mittel der Erstreckung der einzelnen Oxidationszellen parallel zur Oberfläche des Bauteils. Auf diese Weise lässt sich eine sehr gleichmäßige und geschlossene Oberflächenstruktur ausbilden.

Ebenso ist es möglich, dass die Eisenoxidschicht makrostrukturell amorph ausgebildet ist. Dies bewirkt ebenfalls eine geschlossene Oberflächenstruktur. Die Unterscheidung zwischen amorph und feinkristallin hängt von der Betrachtungsgrössenordnung ab. Gegenüber beispielsweise einer Phosphatschicht vermittelt die Brünierung einen amorphen Eindruck. Bei wesentlich feinerer Betrachtung ist sie innerhalb ihrer Mikrostruktur jedoch geordnet und daher im engsten Sinne nicht amorph. Die magnetischen Eigenschaften des Werkstückes bleiben dennoch nahezu unverändert.

Das Bauteil kann einen vor Ausbildung der Eisenoxidschicht geschliffenen oder gehonten Oberflächenbereich aufweisen, wobei nach Ausbildung der Eisenoxidschicht innerhalb dieses Oberflächenbereichs durch das Schleifen oder Honen verursachte Bearbeitungsspuren sichtbar sein können. Dies sind Kratzer, welche durch Abrasivkörner in der Feinbearbeitung verursacht wurden. Dabei ist es nicht erforderlich, dass die Oberfläche vor der Beobachtung der Kratzer abgewischt wird, da an der Oberfläche keine lockeren Beläge anhaften. Insbesondere kann von der Bearbeitung des Schleifens oder Honens wenigstens ein Kratzer pro 5 µm sichtbar sein. Dies bedeutet, dass das Bauteil ein Oberflächenprofil aufweisen kann, das bereits weitgehend vor der Ausbildung der Eisenoxidschicht vorhanden ist und durch die Eisenoxidschicht nur geringfügig verändert wird. Der Nachweis der Kratzer kann insbesondere mittels eines Rasterelektronenmikroskops erfolgen.

Es wird auch auf ein Verfahren zur Oberflächenbehandlung von wälzbeanspruchten Bauteilen aus einem niedrig legierten Stahl beschrieben. Beim Verfahren werden die Bauteile in ein erstes Behandlungsbad eingetaucht, das eine Nitrit-Konzentration von wenigstens 80 g/l aufweist und verbleiben für eine erste Zeitspanne von maximal 5 Minuten im ersten Behandlungsbad. Das erste Behandlungsbad wird für den überwiegenden Teil der ersten Zeitspanne auf einer ersten Temperatur gehalten, die zwischen 132 °C und 137 °C, vorzugsweise zwischen 132 °C und 135 °C, beträgt. Unmittelbar nach Ablauf der ersten Zeitspanne werden die Bauteile aus dem Behandlungsbad entnommen. Der Mindestwert von 80 g/l für die Nitrit-Konzentration bezieht sich ausschließlich auf das Nitrit selbst und enthält nicht das in der Nitritverbindung vorhandene Metall. Unter Einbeziehung des Metalls ergäbe sich beispielsweise für Natriumnitrit ein Mindestwert von 120 g/l.

Das Verfahren hat den Vorteil, dass damit eine sehr hochwertige Eisenoxidschicht mit einer genau vorgegebenen Zusammensetzung und genau definierten Eigenschaften erzeugt werden kann. Die vergleichsweise hohe Konzentration des Oxidationsmittels Nitrit in Verbindung mit der vergleichsweise niedrigen Badtemperatur hat den Vorteil, dass eine große Zahl von Oxidationskeimen ausgebildet wird. Dies stellt eine günstige Voraussetzung für die Ausbildung einer sehr dichten Schicht ohne Lücken dar. Insbesondere kann auf dieser Basis eine flüssigkeitsdichte Schicht ausgebildet werden.

Außerdem führt die hohe Nitrit-Konzentration zu einer entsprechend geringeren Hydroxidkonzentration und somit zu einer weniger aggressiven und eher milden Einstellung des ersten Behandlungsbades. Infolge der milden Einstellung des ersten Behandlungsbades wird die Oberfläche der Bauteile kaum angegriffen, so dass die Oberflächentopographie weitgehend erhalten bleibt. Dies ist insbesondere bei sehr maßhaltig gefertigten Bauteilen und bei Bauteilen mit einem qualitativ hochwertigen Oberflächenfinish von Vorteil. Weiterhin wird beim Verfahren ein Hydrolysierungsüberschuss vermieden. Ein weiterer Vorteil besteht darin, dass kein Korngrenzenangriff erfolgt.

Bei den Bauteilen kann es sich insbesondere um Wälzlagerbauteile handeln. Diese weisen häufig Druckeigenspannungen auf, so dass der Spannungsrisskorrosion beim Brünieren dieser Werkstücke wenig Bedeutung zukommt.

Die Bauteile können vor dem Eintauchen in das erste Behandlungsbad entfettet werden. Dadurch wird vermieden, dass sich Öl- oder Fettreste negativ auf die erzielbare Qualität der mit dem erfindungsgemäßen Verfahren ausgebildeten Eisenoxidschicht auswirken. Weiterhin kann vorgesehen sein, dass die Bauteile vor dem Eintauchen in das erste Behandlungsbad auf eine Anwärmtemperatur von wenigstens 80 °C angewärmt werden. Dies hat den Vorteil, dass ein unzulässig starkes Absinken der ersten Temperatur des ersten Behandlungsbads vermieden wird. Die Spülenfolge wird zur Vermeidung der Lochkorrosion rasch durchlaufen. Vorzugsweise wird das erste Behandlungsbad für den überwiegenden Teil der ersten Zeitspanne im Siedepunkt betrieben.

Weiterhin kann vorgesehen sein, dass das erste Behandlungsbad Nitrit in Form von Natriumnitrit aufweist. Im ersten Behandlungsbad kann außerdem eine Nitrat-Konzentration eingestellt werden, die maximal einem Viertel der Nitrit-Konzentration entspricht. Zudem können dem ersten Behandlungsbad Phosphatpuffer zugesetzt werden.

Für die erste Zeitspanne wird ein Wert von vorzugsweise maximal 3 Minuten gewählt. Diese vergleichsweise kurze Zeitspanne ist für einen "Primärangriff" der Oberfläche der Bauteile und für die Bildung der Oxidationskeime in der Regel ausreichend

Weiterhin ist es vorteilhaft, wenn die Bauteile nach der Entnahme aus dem ersten Behandlungsbad in ein zweites Behandlungsbad eingetaucht werden, für eine zweite Zeitspanne im zweiten Behandlungsbad verbleiben und unmittelbar nach Ablauf der zweiten Zeitspanne aus dem zweiten Behandlungsbad entnommen werden.

Durch die Verteilung der Behandlung auf zwei Bäder kann eine qualitativ hochwertige Eisenoxidschicht mit genau vorgegebenen Parametern ausgebildet werden. Unter Zugrundelegung der im ersten Behandlungsbad erzeugten engen Verteilung von Oxidationskeimen auf der Oberfläche der Bauteile kann das zweite Behandlungsbad im Hinblick auf das Schichtwachstum optimiert werden. Hierzu kann eine Reihe von Maßnahmen ergriffen werden:
Das zweite Behandlungsbad kann für den überwiegenden Teil der zweiten Zeitspanne auf einer zweiten Temperatur gehalten werden. Die zweite Zeitspanne kann größer als die erste Zeitspanne gewählt werden. Insbesondere kann die zweite Zeitspanne wenigstens doppelt so groß wie die erste Zeitspanne gewählt werden. Beispielsweise kann für die zweite Zeitspanne ein Wert von wenigstens 12 Minuten gewählt werden. Durch die vergleichsweise lange zweite Zeitspanne verbleibt ausreichend Zeit für ein gleichmäßiges Schichtwachstum.

Die zweite Temperatur wird vorzugsweise höher als die erste Temperatur eingestellt. Insbesondere wird die zweite Temperatur um 3 K bis 5 K höher eingestellt als die erste Temperatur. Der Temperaturunterschied ermöglicht eine verbesserte Haftfestigkeit. Beispielsweise wird die zweite Temperatur auf einen Wert von maximal 140 °C eingestellt. Ebenso ist es auch möglich, dass die zweite Temperatur auf einen Wert von maximal 138 °C eingestellt wird.

Weiterhin kann vorgesehen sein, dass im zweiten Behandlungsbad eine höhere Nitrit-Konzentration eingestellt wird als im ersten Behandlungsbad. Beispielsweise kann im zweiten Behandlungsbad eine Nitrit-Konzentration zwischen 140 g/l und 170 g/l eingestellt werden. Die hohe Konzentration des Oxidationsmittels Nitrit wirkt sich positiv auf die Qualität des Schichtwachstums aus. Da bereits durch die Behandlung im ersten Behandlungsbad der Primärangriff der Oberfläche erfolgte und nunmehr Oxidationskeime in großer Zahl vorhanden sind, kann das zweite Behandlungsbad im Hinblick auf das Schichtwachstum optimiert werden und der Aspekt der Bildung von Oxidationskeimen unberücksichtigt bleiben. Demgemäß ist eine mildere Badeinstellung mit einem höheren Anteil an Oxidationsmittel und somit niedrigerem Anteil an Hydroxid möglich.

Um möglichst optimale Reaktionsbedingungen zu schaffen, können die Bauteile während der Behandlung im ersten Behandlungsbad und/oder während der Behandlung im zweiten Behandlungsbad mit einer Geschwindigkeit von wenigstens 20 cm/min bewegt werden. Dadurch wird erreicht, dass die Oberfläche der Bauteile fortwährend mit frischem Badmedium versorgt wird.

Nach der Entnahme der Bauteile aus dem zweiten Behandlungsbad und Spülen der Bauteile kann ein Dewatering Fluid auf die Bauteile aufgebracht werden. Dadurch wird ein verbesserter Korrosionsschutz erzielt.

Weiterhin kann vorgesehen sein, dass nach jedem der Brünierbäder eine gekühlte Spüle zum Beenden der Oberflächenreaktion angefahren wird, deren Temperatur unter 65°C, insbesondere unter 50°C, gehalten wird.

Das Verfahren ermöglicht insgesamt eine Oberflächenbehandlung mit einer sehr geringen Oxidationstiefe und einem geringen Oberflächenangriff. Die milde Einstellung der Behandlungsbäder erfordert die Absenkung des Hydroxidgehalts und somit eine Zunahme des Oxidationsmittelanteils, was der intensiven Keimbildung und Ausbildung einer dichten Primärschicht zuträglich ist. Allerdings beschleunigt ein erhöhter Oxidationsmittelgehalt die Reaktionsgeschwindigkeit und fördert bei längerer Einwirkzeit die Bildung dicker Schichten, die sich von amorph bis feinkristallin nach amorph bis grobkörnig wandeln, was ungünstig ist. Bei noch höherem Oxidationsmittelgehalt wird trotz hoher Reaktionsgeschwindigkeit hingegen durch Passivierung der Schichtdickenaufbau wieder herabgesetzt und auf dünne Werte vergleichmäßigt. Daher muss der Oxidationsmittelgehalt sehr hoch gewählt werden und der für eine gleichmäßige Schicht ungünstigen Reaktionsgeschwindigkeitserhöhung muss durch Absenkung der Badtemperatur auf möglichst niedrige Werte begegnet werden, welche die Reaktion verlangsamen. Bei einem Betrieb der Behandlungsbäder im Siedepunkt ist die Absenkung der Badtemperatur gleichbedeutend mit einem Absenken der Konzentration, was wiederum dem milden Angriff und der dünnen Schicht zugute kommt. Die Entstehung einer Oxidschicht beginnt im Allgemeinen für Wälzlagerstähle bei ca. 130 °C, so dass das erste und zweite Behandlungsbad wenigstens diese Temperatur aufweisen sollten.

Im Rahmen des Verfahrens wird somit ein sehr hoher Oxidationsmittelanteil verwendet und die dabei sonst auftretende hohe Reaktionsgeschwindigkeit, intensive Schichtbildung und braune Überoxidation durch starke Überhöhung des Oxidationsmittelanteiles und gleichzeitige Absenkung der Temperatur und der Konzentration verhindert, so dass sich eine dünne Schicht reines Fe₃O₄ in bester tiefschwarzer Qualität bildet.

Um die unterschiedlichen Mechanismen bei erster Anoxidation und späterer Durchoxidation optimal steuern zu können, wird der Prozess auf zwei Behandlungsbäder aufgeteilt. Dadurch wird, bei gegenüber dem ersten Behandlungsbad leicht erhöhter Temperatur des zweiten Behandlungsbads, auch die Haftfestigkeit der Oxidschicht erhöht.

Im Ergebnis wird durch das Verfahren eine Eisenoxidschicht in einer Dicke ausgebildet, die üblicherweise mit in der DIN-Norm 50938 näher spezifizierten Einbadverfahren erzielt wird. Die Auslegung als Zweibadverfahren ermöglicht jedoch die Erzielung einer besseren Schichtqualität als bei einem EinbadVerfahren.

Die Erfindung wird im Folgenden näher erläutert.

Mit dem Verfahren können wälzbeanspruchte Bauteile aus einem niedrig legierten Stahl, insbesondere aus einem Wälzlagerstahl, vor allem aus einem durchhärtenden Wälzlagerstahl, behandelt werden. Beispielsweise können die Bauteile aus einem Stahl mit der Bezeichnung 100Cr6 hergestellt sein. Dieser Stahl enthält, bezogen auf seine Masse, 0,93 bis 1,05 % Kohlenstoff, 1,35 bis 1,60 % Chrom, 0,25 bis 0,45 % Mangan, 0,15 bis 0,35 % Silizium und bis zu 0,1 % Molybdän. Der Phosphorgehalt beträgt maximal 0,025 %, der Schwefelgehalt maximal 0,015 %. Außerdem können herstellungsbedingt noch kleine Mengen an weiteren Elementen enthalten sein.

Unter wälzbeanspruchten Bauteilen sind Bauteile zu verstehen, die bei ihrem bestimmungsgemäßen Gebrauch einer Wälzbeanspruchung ausgesetzt sind. Eine Wälzbeanspruchung tritt auf, wenn ein Bauteil auf einer Unterlage abrollt, wobei ein berührender Kontakt zwischen der Oberfläche des Bauteils und der Unterlage ausgebildet ist. Wälzbeanspruchte Bauteile können beispielsweise Lagerbauteile wie Lagerringe oder Wälzkörper sein.

Vor der Durchführung des Verfahrens werden die Bauteile in ihren Endabmessungen hergestellt, d. h. durch das Verfahren wird die Maßhaltigkeit der Bauteile nicht nennenswert beeinflusst. Die geringe Volumenszunahme bei der Oxidation des Eisens steht bei sehr dünnen Schichten nahezu im Gleichgewicht mit einer leichten Anlösung der Oberfläche, so dass höchstens submikrometrische Massunterschiede auftreten können. Weiterhin wird vor der Durchführung des erfindungsgemäßen Verfahrens bei den Bauteilen eine gewünschte Oberflächentopographie ausgebildet. Dies kann beispielsweise durch Schleifen oder Honen erfolgen. Die Oberflächentopographie der Bauteile wird durch das erfindungsgemäße Verfahren lediglich in einem geringen Ausmaß verändert. Bei der vorausgehenden Oberflächenbehandlung erzeugte Bearbeitungsspuren, beispielsweise in Form von Kratzern, sind wenigsten zum überwiegenden Teil auch noch im Anschluss an die Behandlung der Werkstücke nach dem Verfahren vorhanden. Dies bedeutet, dass nach der Durchführung des erfindungsgemäßen Verfahrens quer zur Hauptbearbeitungsrichtung der vorausgehenden Oberflächenbehandlung typischer Weise noch wenigstens ein durch spanende Bearbeitung mit Abrasivkorn erzeugter Kratzer pro 5 µm sichtbar ist. Die Kratzerdichte kann durch Betrachtung der Oberfläche mit einem Rasterelektronenmikroskop ermittelt werden, wobei die unmittelbar mit dem Verfahren erzeugte Eisenoxidschicht beobachtet wird, die zuvor nicht durch Abwischen von etwaigen Belägen befreit wird. Die mit dem Verfahren hergestellte Eisenoxidschicht zeigt bei unverschmutztem Bad keinen Abrieb, wenn das behandelte Bauteil mit einem Lappen abgewischt wird.

Durch das Verfahren wird im Bereich der Oberfläche der Bauteile eine Eisenoxidschicht ausgebildet. Die Eisenoxidschicht kann vollflächig ausgebildet werden oder sich lediglich über einen Teilbereich der Oberfläche der Bauteile erstrecken und eine Dicke von bis zu 2,0 µm aufweisen. Insbesondere werden jedoch dünnere Eisenoxidschichten unterhalb von 0,75 oder **sogar unterhalb von 0,65 µm ausgebildet. Die Mindestdicke der Eisenoxidschicht beträgt ca. 0,4 µm.**

Die Eisenoxidschicht weist eine Verbundstruktur mit einer Zusammensetzung gemäß der Summenformel Fe₃O₄ auf. Fe₃O₄ besitzt eine inverse Spinellstruktur, wobei die Sauerstoffionen in kubisch dichtester Packung vorliegen. Eine Elementarzelle weist acht Formeleinheiten Fe₃O₄ auf. Demgemäß sind pro Elementarzelle 56 Atome vorhanden und gemäß der Struktur A8 B16 032 bzw. Fe(III) [Fe(II) Fe(III)] O4 angeordnet. Fe(III) bedeutet dabei dreiwertiges, Fe(II) zweiwertiges Eisen. In der Elementarzelle sind 32 Positionen mit Sauerstoffionen besetzt. 16 Positionen sind mit Eisenionen in einer tetraedrischen Sauerstoffumgebung und 8 Positionen mit Eisenionen in einer oktaedrischen Sauerstoffumgebung besetzt.

Die Stöchiometrie des Fe₃O₄ ist in der Eisenoxidschicht sehr genau eingehalten. Insbesondere weist die Eisenoxidschicht kein freies Fe₂O₃ oder allenfalls Spuren von freiem Fe₂O₃ unterhalb von 0,5 Gew.% auf. Als freies Fe₂O₃ wird im Folgenden Fe₂O₃ bezeichnet, das kein Bestandteil der Verbundstruktur mit der Summenformel Fe₃O₄ ist. Im freien Fe₂O₃ ist das Eisen stärker oxidiert als im Fe₃O₄. Auch sonstige Stoffe können allenfalls in sehr geringen Mengen in der Eisenoxidschicht vorhanden sein, so dass der Anteil der Fe₃O₄ -Verbundstruktur an der Eisenoxidschicht wenigstens 99 Gew.% beträgt. Freies FeO kann zwar im Prinzip in geringen Mengen in der Eisenoxidschicht vorhanden sein, ist jedoch nicht stabil und daher allenfalls während der Herstellung der Eisenoxidschicht zu beobachten. Als freies FeO wird im Folgenden FeO bezeichnet, das kein Bestandteil der Verbundstruktur mit der Summenformel Fe₃O₄ ist. Im freien FeO ist das Eisen weniger stark oxidiert als im Fe₃O₄.

Die vorstehenden Angaben beziehen sich auf eine Betrachtung des Fe₃O₄ als ein einheitliches Eisenoxid, bei dem das Eisen teils als Fe²⁺-Ionen, teils als Fe³⁺-Ionen vorliegt.

Mitunter wird Fe₃O₄ auch als ein Mischoxid aus FeO und Fe₂O₃ betrachtet, wobei die Anteile von FeO und Fe₂O₃ durch die Stöchiometrie des Fe₃O₄ vorgegeben sind und demgemäß FeO und Fe₂O₃ gleich häufig vorkommen. Das Gewichtsverhältnis von FeO zu Fe₂O₃ im Fe₃O₄ kann unter Berücksichtigung der Atommassen von Eisen und Sauerstoff ermittelt werden. Bei der Betrachtung von Fe₃O₄ als Mischoxid bedeutet die Abwesenheit von Fe₂O₃, dass über den stöchiometrischen Anteil von Fe₂O₃ am Fe₃O₄ hinaus kein weiteres Fe₂O₃ in der Eisenoxidschicht vorhanden ist. Ein Mindestanteil von 99 Gew.% Fe₃O₄ bedeutet, das in wenigstens 99 Gew.% des Eisenoxids die Anteile von FeO und Fe₂O₃ durch die Stöchiometrie des Fe₃O₄ vorgegeben sind. Bezüglich der räumlichen Verteilung der einzelnen Oxide ist aus energetischen Gründen davon auszugehen, dass im Grenzbereich zum nicht oxidierten Stahl, d. h. im Bereich der Innenseite der Eisenoxidschicht, überwiegend FeO anzutreffen ist. Auf der Oberfläche, d. h. im Bereich der Außenseite der Eisenoxidschicht, ist überwiegend Fe₂O₃ anzutreffen.

Die Eisenoxidschicht der vorstehend näher definierten Zusammensetzung ist polykristallin oder amorph ausgebildet. Bei einer polykristallinen Ausbildung weist die Eisenoxidschicht eine Vielzahl sehr kleiner Oxidationszellen auf. Insbesondere können die Oxidationszellen so ausgebildet sein, dass ihre Erstreckung senkrecht zur Oberfläche der Bauteile größer ist als ihre Erstreckung parallel zur Oberfläche der Bauteile. Da die Oxidationszellen nicht notwendigerweise exakt gleich groß sind, gilt das Größenverhältnis für die Erstreckungen senkrecht und parallel zur Schicht nicht notwendigerweise für jede einzelne Oxidationszelle, sondern lediglich im Mittel. Es ist daher zweckmäßig, für die Ermittlung des Größenverhältnisses keine Einzelwerte, sondern Mittelwerte heranzuziehen. Beispielsweise eignet sich hierfür eine arithmetische Mittelwertbildung.

Infolge ihrer kleinen Abmessungen ist es möglich, dass die Oxidationszellen innerhalb der Eisenoxidschicht nahezu lückenlos aneinandergrenzen, so dass die Eisenoxidschicht sehr dicht ausgebildet ist. Insbesondere ist die Eisenoxidschicht so dicht, dass Sie von Flüssigkeiten nicht durchdrungen werden kann und somit eine Flüssigkeit, welche die Eisenoxidschicht benetzt, den unterhalb der Eisenoxidschicht vorhandenen Stahl nicht angreifen kann. Demgemäß liefert ein Test, bei dem die Bauteile für 60 Sekunden in eine 5 % Kupfersulfatlösung eingetaucht werden, keine bei einer 10-fachen Vergrößerung erkennbaren roten Stellen, welche auf Lücken in der Eisenoxidschicht hindeuten. Auch bei einer Einwirkzeit von fünf Minuten sind in der Regel keine roten Stellen erkennbar

Außerdem bleibt ein Essigsäuretest gemäß DIN 50938 über den gesamten dort angegeben Zeitraum und sogar ein Vielfaches darüber hinaus ohne Angriff.

Die mit dem Verfahren ausgebildete Eisenoxidschicht weist trotz der niedrigen Badtemperaturen, die häufig zu grauschwarzen Farben tendieren können, eine tiefschwarze Farbe auf und ist frei von braunen Bereichen, die auf die Anwesenheit von Fe₂O₃ hinweisen. Insbesondere weist die Schwarzfärbung auch keine Rot-/Braunanteile auf, die darauf hindeuten, dass freies Fe₂O₃ in der Eisenoxidschicht anteilig enthalten ist.

Zur Erzeugung der Eisenoxidschicht im Bereich der Oberfläche der Bauteile werden die Bauteile zunächst entfettet. Dies kann beispielsweise durch Eintauchen in ein alkalisches Entfettungsbad erfolgen. Die Zusammensetzung des Entfettungsbads wird so gewählt, dass es nicht zu einem Angriff der Oberfläche der Bauteile und einer Mikroaufrauhung kommt. Aus diesem Grund wird insbesondere ein hydroxidfreie Entfettungsbad eingesetzt. Auch auf eine Beize sollte verzichtet werden. Typischerweise verweilen die Bauteile für ca. 15 Minuten im Entfettungsbad, wobei die Temperatur des Entfettungsbads zwischen 80°C und 90 °C beträgt. Insbesondere kann auch eine Entfettung mittels mehrerer hintereinander geschalteter Entfettungsbäder aufsteigender Temperatur durchgeführt werden, wobei bevorzugt zunächst ein demulgierendes Entfettungsbad und danach ein emulgierendes Entfettungsbad durchlaufen wird. Dabei beträgt die Temperatur des ersten Entfettungsbads beispielsweise wenigstens 60 °C und die Temperatur des zweiten Entfettungsbads zwischen 80 °C und 90 °C beträgt. Durch den Einsatz von Mikrofiltration, Ölabscheidung, Koaleszenzabscheidung und Oberflächenflutung sowie Warenträgerbewegung und Richtdüsen, einzeln oder in Kombination, lässt sich eine sehr hohe Reinheit der Entfettungsbäder erzielen und damit die Rückfettung der Bauteile auf sehr geringe Werte reduzieren. Eine gründliche Entfettung ist erforderlich, da die nachfolgende Behandlung der Bauteile unter sehr milden Bedingungen erfolgt und daher bereits durch geringe Öl- oder Fettrückstände gestört würde. Ein Beizen der Bauteile wird jedoch nicht durchgeführt, da dies zu einer unerwünschten Oberflächenveränderung führen würde.

Während der Entfettung werden die Bauteile auf eine Anwärmtemperatur T0 von wenigstens 80 °C erwärmt. Ebenso ist es auch möglich, die Anwärmung teils während der Entfettung und teils nach der Entfettung durchzuführen.

Die angewärmten Bauteile werden in ein erstes Behandlungsbad eingetaucht und verweilen dort für eine erste Zeitspanne t1. Das erste Behandlungsbad ist eine wässrige Lösung, die als Inhaltsstoffe Hydroxid, Nitrit, Nitrat und mehrere Phosphatpuffer enthält. Die Verwendung anderer Oxidationsmittel anstatt von Alkalinitrit oder' Alkalinitrat führt zu Sauerstoffübertragungen, die nicht in der gewünschten Weise für optimale Schichtbildung kontrollierbar sind, und ist für tribologische Brünierungen nicht zielführend. Alkalihydroxid, Alkalinitrit und Alkalinitrat können beispielsweise als Natriumverbindungen oder Kaliumverbindungen vorliegen. Im Hinblick auf Kosten- und Beschaffungssituation liegen die Inhaltsstoffe üblicherweise in Form von Natriumverbindungen vor, weswegen im Folgenden die Zusammensetzungen auf Basis der allgemeinüblichen Natriumverbindungen angegeben werden.

Die Lösung kann durch Auflösen eines Salzes der Zusammensetzung 15 Gew.% Natriumnitrit, 3 Gew.% Natriumnitrat, 80 Gew.% Natriumhydroxid und 2 Gew.% Phosphatpuffer in demineralisiertem Wasser hergestellt werden. Das erste Behandlungsbad wird bevorzugt im Siedepunkt betrieben und weist eine erste Temperatur T1 auf, die zwischen 132 °C und 137 °C, vorzugsweise zwischen 132 °C und 135 °C, beträgt. Da der Siedepunkt einer wässrigen Lösung konzentrationsabhängig ist, wird über eine Variation der Konzentration der jeweils gewünschte Siedepunkt eingestellt. Beispielsweise wird bei einem gewünschten Siedepunkt von 132 °C im ersten Behandlungsbad eine Konzentration an Natriumhydroxid von 474 g/l und an Natriumnitrit von 132 g/l eingestellt. Eine Konzentration von 132 g/l an Natriumnitrit entspricht einer reinen Nitritkonzentration, d. h. ohne den Natriumanteil, von 88 g/l. Bei einem gewünschten Siedepunkt von 135 °C bzw. 137 °C wird im ersten Behandlungsbad eine Konzentration an Natriumhydroxid von 506 g/l bzw. 527 g/l und an Natriumnitrit von 138 g/l bzw. 142 g/l eingestellt. Daneben sind jeweils Natriumnitrat und Phosphatpuffer in geringen Konzentrationen in der wässrigen Lösung vorhanden, wobei die Konzentration des Natriumnitrats maximal ein Viertel der Konzentration des Natriumnitrits beträgt.

Unmittelbar nach dem Eintauchen der Bauteile kann die erste Temperatur T1 des ersten Behandlungsbads vorübergehend unter die vorstehend genannten Werte absinken, da die Bauteile vor dem Eintauchen in das erste Behandlungsbad die Anwärmtemperatur T0 aufweisen, die in der Regel niedriger ist als die erste Temperatur T1 des ersten Behandlungsbads. Durch eine besonders schnellansprechende Beheizung des ersten Behandlungsbads wird jedoch erreicht, dass der Temperatureinbruch im ersten Behandlungsbad nur von kurzer Dauer ist und für den überwiegenden Teil der ersten Zeitspanne t1 das vorstehend genannte Intervall für die erste Temperatur T1 eingehalten wird. Abhängig von den Möglichkeiten der Beheizung kann auch die Chargengröße und damit die Gesamtmasse der eingetauchten Bauteile angepasst werden. Die erste Zeitspanne t1 beträgt maximal 5 Minuten. Insbesondere kann die erste Zeitspanne t1 auch maximal 3 Minuten betragen.

Im ersten Behandlungsbad strömt das Badmedium über die Oberfläche der Bauteile. Dies wird neben der Siedebewegung des Bades insbesondere dadurch erreicht, dass die Bauteile im ersten Behandlungsbad mit einer Geschwindigkeit von wenigstens 20 cm/min bewegt werden.

Im ersten Behandlungsbad erfolgt ein "Primärangriff" der Oberfläche der Bauteile durch Nitrit und Nitrat. Dabei werden in kurzer Zeit extrem viele Oxidationskeime ausgebildet. Ein Schichtwachstum erfolgt jedoch nicht. Eine dichte Belegung der Oberfläche der Bauteile mit Oxidationskeimen ist Voraussetzung dafür, dass sehr viele Oxidationszellen entstehen, die relativ schnell miteinander in Berührung treten, so dass eine sehr feinkristalline Eisenoxidschicht ausgebildet wird. Da die Bildung von Oxidationskeimen durch eine hohe Oxidationsmittelkonzentration begünstigt wird, empfiehlt sich für das erste Behandlungsbad eine hohe Oxidationsmittelkonzentration. Allerdings sinkt mit steigender Oxidationsmittelkonzentration zwangsweise die Hydroxidkonzentration, so dass das erste Behandlungsbad immer milder wird und schließlich die Oberfläche nicht mehr ausreichend angreift. Um eine hohe Oxidationskeimdichte zu erzeugen ist somit eine hohe, allerdings auch nicht zu hohe, Oxidationsmittelkonzentration erforderlich, so dass noch eine ausreichend hohe Hydroxidkonzentration möglich ist. Dadurch, dass die Hydroxidkonzentration nicht allzu hohe Werte annimmt, und gleichzeitig Siedepunkt und Konzentration niedrig gehalten werden, ist das Risiko eines unerwünschten Hydrolysierungsüberschusses relativ gering. Durch den Zusatz von Alkalinitrat im ersten Behandlungsbad kann der Oberflächenangriff auch dann noch erfolgen, wenn das Alkalihydroxid in seiner niedrigen Konzentration hierfür nicht mehr genügt. Konkrete Werte für die einzelnen Konzentrationen können dem vorstehend geschilderten Ausführungsbeispiel entnommen werden.

Unmittelbar nach Ablauf der ersten Zeitspanne t1 werden die Bauteile aus dem ersten Behandlungsbad entnommen und kalt gespült, um die Reaktion zu stoppen. Die kalte Spüle nach dem ersten wie auch nach dem zweiten Behandlungsbad ist unverzichtbar und soll durch Kühlmassnahmen unter 65°C, möglichst sogar unter 50°C, gehalten werden. Die Bauteile weisen nach dem ersten Brünierbad bei allgemeinüblichen Verhältnissen von Werkstückmenge zu Badvolumen noch keine Schwarzfärbung, sondern eine goldfarbene Irideszenz auf.

Nach dem Spülen werden die Bauteile in ein zweites Behandlungsbad eingetaucht und verweilen dort für eine zweite Zeitspanne t2. Das zweite Behandlungsbad ist eine wässrige Lösung, die als Inhaltsstoffe Hydroxid, Nitrit und einen Phosphatpuffer enthält. Analog zum ersten Behandlungsbad handelt es sich dabei insbesondere um Natriumverbindungen. Die Lösung kann durch Auflösen eines Salzes der Zusammensetzung 27 Gew.% Natriumnitrit, 65 Gew.% Natriumhydroxid, 4 Gew.% Phosphatpuffer und 4 Gew. % weitere Inhaltsstoffe wie z.B. Entschäumer in demineralisiertem Wasser hergestellt werden. Im Gegensatz zu dem Salz, das beim ersten Behandlungsbad verwendet wird, enthält das Salz zum Ansetzen des zweiten Behandlungsbades kein Natriumnitrat.

Ebenso wie das erste Behandlungsbad wird auch das zweite Behandlungsbad bevorzugt im Siedepunkt betrieben und weist eine zweite Temperatur T2 auf, die höher als die erste Temperatur T1 des ersten Behandlungsbads ist. Gute Ergebnisse werden erzielt, wenn die zweite Temperatur T2 zwischen 135 °C und 140 °C, insbesondere zwischen 135 °C und 138 °C, beträgt. Der jeweils gewünschte Siedepunkt wird über die Konzentration im zweiten Behandlungsbad eingestellt. Für einen Siedepunktbetrieb bei einer zweiten Temperatur von 135 °C werden im zweiten Behandlungsbad eine Konzentration an Natriumhydroxid von 499 g/l und an Natriumnitrit von 228 g/l eingestellt. Bei einem gewünschten Siedepunkt von 138 °C bzw. 140 °C werden im zweiten Behandlungsbad eine Konzentration an Natriumhydroxid von 525 g/l bzw. 542 g/l und an Natriumnitrit von 239 g/l bzw. 247 g/l eingestellt. Daneben sind jeweils Phosphatpuffer und sonstige Inhaltsstoffe in geringen Konzentrationen in der wässrigen Lösung vorhanden.

Bei einem Siedepunktbetrieb des zweiten Behandlungsbad zwischen 135 °C und 140 °C beträgt die Konzentration an Natriumnitrit in der Lösung somit zwischen 228 g/l und 247 g/l. Dies bedeutet, dass im zweiten Behandlungsbad eine höhere Nitritkonzentration vorgesehen ist als im ersten Behandlungsbad. Die Konzentration an Natriumhydroxid beträgt zwischen 499 g/l und 542 g/l.

In entsprechender Weise wie beim ersten Behandlungsbad kann beim zweiten Behandlungsbad unmittelbar nach dem Eintauchen der Bauteile die zweite Temperatur T2 vorübergehend unter die vorstehend genannten Werte absinken. Durch eine besonders schnellansprechende Beheizung des zweiten Behandlungsbads und eventuell eine Begrenzung der Chargengröße wird jedoch erreicht, dass für den überwiegenden Teil der zweiten Zeitspanne t2 das vorstehend genannte Intervall für die zweite Temperatur T2 eingehalten wird. Die zweite Zeitspanne t2 beträgt wenigstens 12 Minuten und ist deutlich größer als die erste Zeitspanne t1.

Ähnlich wie beim ersten Behandlungsbad werden die Bauteile auch während der zweiten Zeitspanne t2 im zweiten Behandlungsbad mit einer Geschwindigkeit von wenigstens 20 cm/min bewegt.

Im zweiten Behandlungsbad kann die Hydroxidkonzentration niedriger gewählt werden als im ersten Behandlungsbad, da auf der Oberfläche der Bauteile bereits Oxidationskeime vorhanden sind und der durch das Hydroxid geförderte Primärangriff somit nicht mehr so wichtig ist. Dadurch ist es möglich eine sehr hohe Konzentration an Nitrit einzustellen, welches als Oxidationsmittel wirkt.

Unmittelbar nach Ablauf der zweiten Zeitspanne t2 werden die Bauteile aus dem zweiten Behandlungsbad entnommen und kalt gespült, um die Reaktion zu stoppen. Die kalte Spüle nach dem ersten wie auch nach dem zweiten Behandlungsbad soll durch Kühlmassnahmen unter 65°C, möglichst sogar unter 50°C, gehalten werden. Dann werden die Bauteile heiß gespült, beispielsweise bei einer Temperatur von wenigstens 80 °C. Als Spülmedium kann jeweils demineralisiertes Wasser verwendet werden. Nach dem Spülen weist die Oberfläche der Bauteile eine tiefschwarze Eisenoxidschicht mit den eingangs beschriebenen Eigenschaften auf.

Als ein letzter Behandlungsschritt erfolgt jetzt noch eine Konservierung der Bauteile, beispielsweise durch Eintauchen in ein Konservierungsbad. Das Konservierungsbad kann insbesondere ein Dewatering Fluid aufweisen.

Mit der Konservierung ist die Behandlung der Bauteile abgeschlossen.

## Patentansprüche

1. Wälzbeanspruchtes Bauteil mit einer Oberfläche, die wenigstens bereichsweise als eine Eisenoxidschicht ausgebildet ist, wobei die Eisenoxidschicht wenigstens 99 Gew.% Eisenoxid in Form einer Verbundstruktur mit der Summenformel Fe₃O₄ und maximal 0,5 Gew.% freies Eisenoxid der Summenformel Fe₂O₃, das kein Bestandteil der Verbundstruktur ist, enthält und wobei die Eisenoxidschicht flüssigkeitsdicht ausgebildet ist und eine Dicke von maximal 2,0 µm aufweist.

2. Bauteil nach Anspruch 1, **dadurch gekennzeichnet, dass** die Eisenoxidschicht kein freies Eisenoxid der Summenformel Fe₂O₃ enthält.

3. Bauteil nach einem der vorhergehenden Ansprüche, **dadurch gekennzeichnet, dass** die Verbundstruktur Eisenoxid der Summenformel Fe₂O₃ und Eisenoxid der Summenformel FeO in einem Stöchiometrieverhältnis von 1:1 enthält.

4. Bauteil nach einem der vorhergehenden Ansprüche, **dadurch gekennzeichnet, dass** es als ein Wälzlagerbauteil ausgebildet ist.

5. Bauteil nach einem der vorhergehenden Ansprüche, **dadurch gekennzeichnet, dass** es aus einem niedrig legierten Stahl gefertigt ist.

6. Bauteil nach einem der vorhergehenden Ansprüche, **dadurch gekennzeichnet, dass** es aus einem durchhärtenden Stahl gefertigt ist.

7. Bauteil nach einem der vorhergehenden Ansprüche, **dadurch gekennzeichnet, dass** es aus einem Wälzlagerstahl gefertigt ist.

8. Bauteil nach einem der vorhergehenden Ansprüche, **dadurch gekennzeichnet, dass** es aus einem Stahl der Sorte 100Cr6 gefertigt ist.

9. Bauteil nach einem der vorhergehenden Ansprüche, **dadurch gekennzeichnet, dass** die Eisenoxidschicht eine Dicke von maximal 1 µm aufweist.

10. Bauteil nach Anspruch 9, **dadurch gekennzeichnet, dass** die Eisenoxidschicht eine Dicke von maximal 0,75 µm aufweist.

11. Bauteil nach einem der vorhergehenden Ansprüche, **dadurch gekennzeichnet, dass** die Eisenoxidschicht polykristallin ausgebildet ist und eine Vielzahl von Oxidationszellen aufweist, wobei das arithmetische Mittel der Erstreckung der einzelnen Oxidationszellen senkrecht zur Oberfläche des Bauteils größer ist als das arithmetische Mittel der Erstreckung der einzelnen Oxidationszellen parallel zur Oberfläche des Bauteils.

12. Bauteil nach einem der Ansprüche 1 bis 10, **dadurch gekennzeichnet, dass** die Eisenoxidschicht makrostrukturell amorph ausgebildet ist.

13. Bauteil nach einem der vorhergehenden Ansprüche, **dadurch gekennzeichnet, dass** es einen geschliffenen oder gehonten Oberflächenbereich aufweist, innerhalb dessen durch das Schleifen oder Honen verursachte Bearbeitungsspuren sichtbar sind.

14. Bauteil nach Anspruch 13, **dadurch gekennzeichnet, dass** von der Bearbeitung des Schleifens oder Honens wenigstens ein Kratzer pro 5 µm sichtbar ist.

## Claims

1. Component subject to rolling stresses, having a surface which is formed at least in certain regions as an iron oxide layer, wherein the iron oxide layer contains at least 99% by weight iron oxide in the form of a composite structure with the chemical formula Fe₃O₄ and at most 0.5% by weight free iron oxide of the chemical formula Fe₂O₃, which is not a constituent of the composite structure, and wherein the iron oxide layer has a liquid-tight form and has a thickness of at most 2.0 µm.

2. Component according to Claim 1, **characterized in that** the iron oxide layer does not contain any free iron oxide of the chemical formula Fe₂O₃.

3. Component according to either of the preceding claims, **characterized in that** the composite structure contains iron oxide of the chemical formula Fe₂O₃ and iron oxide of the chemical formula FeO in a stoichiometric ratio of 1:1.

4. Component according to one of the preceding claims, **characterized in that** it is in the form of a rolling bearing component.

5. Component according to one of the preceding claims, **characterized in that** it is produced from a low-alloy steel.

6. Component according to one of the preceding claims, **characterized in that** it is produced from a fully hardening steel.

7. Component according to one of the preceding claims, **characterized in that** it is produced from a rolling bearing steel.

8. Component according to one of the preceding claims, **characterized in that** it is produced from a steel of grade 100Cr6.

9. Component according to one of the preceding claims, **characterized in that** the iron oxide layer has a thickness of at most 1 µm.

10. Component according to Claim 9, **characterized in that** the iron oxide layer has a thickness of at most 0.75 µm.

11. Component according to one of the preceding claims, **characterized in that** the iron oxide layer has a polycrystalline form and has a multiplicity of oxidation cells, wherein the arithmetic mean of the extent of the individual oxidation cells perpendicular to the surface of the component is greater than the arithmetic mean of the extent of the individual oxidation cells parallel to the surface of the component.

12. Component according to one of Claims 1 to 10, **characterized in that** the iron oxide layer has an amorphous macrostructure.

13. Component according to one of the preceding claims, **characterized in that** it has a ground or honed surface region, within which machining tracks made by the grinding or honing are visible.

14. Component according to Claim 13, **characterized in that** at least one scratch is visible per 5 µm from the grinding or honing machining.

## Revendications

1. Pièce sollicitée par roulement avec une surface, qui est formée au moins localement sous la forme d'une couche d'oxyde de fer, dans laquelle la couche d'oxyde de fer contient au moins 99 % en poids d'oxyde de fer sous la forme d'une structure composite de la formule brute Fe₃O₄ et au maximum 0,5 % en poids d'oxyde de fer libre de la formule brute Fe₂O₃, qui n'est pas un composant de la structure composite, et dans laquelle la couche d'oxyde de fer est réalisée de façon étanche au liquide et présente une épaisseur de 2,0 µm au maximum.

2. Pièce selon la revendication 1, **caractérisée en ce que** la couche d'oxyde de fer ne contient pas d'oxyde de fer libre de la formule brute Fe₂O₃.

3. Pièce selon l'une quelconque des revendications précédentes, **caractérisée en ce que** la structure composite contient de l'oxyde de fer de la formule brute Fe₂O₃ et de l'oxyde de fer de la formule brute FeO dans un rapport stoechiométrique de 1:1.

4. Pièce selon l'une quelconque des revendications précédentes, **caractérisée en ce qu'**elle est réalisée sous la forme d'une pièce de palier à roulement.

5. Pièce selon l'une quelconque des revendications précédentes, **caractérisée en ce qu'**elle est fabriquée en un acier faiblement allié.

6. Pièce selon l'une quelconque des revendications précédentes, **caractérisée en ce qu'**elle est fabriquée en un acier trempant.

7. Pièce selon l'une quelconque des revendications précédentes, **caractérisée en ce qu'**elle est fabriquée en un acier pour palier à roulement.

8. Pièce selon l'une quelconque des revendications précédentes, **caractérisée en ce qu'**elle est fabriquée en un acier de la nuance 100Cr6.

9. Pièce selon l'une quelconque des revendications précédentes, **caractérisée en ce que** la couche d'oxyde de fer présente une épaisseur de 1 µm au maximum.

10. Pièce selon la revendication 9, **caractérisée en ce que** la couche d'oxyde de fer présente une épaisseur de 0,75 µm au maximum.

11. Pièce selon l'une quelconque des revendications précédentes, **caractérisée en ce que** la couche d'oxyde de fer est réalisée sous forme polycristalline et présente une multiplicité de cellules d'oxydation, dans laquelle la moyenne arithmétique de l'extension des cellules d'oxydation individuelles perpendiculairement à la surface de la pièce est plus grande que la moyenne arithmétique de l'extension des cellules d'oxydation individuelles parallèlement à la surface de la pièce.

12. Pièce selon l'une quelconque des revendications 1 à 10, **caractérisée en ce que** la couche d'oxyde de fer est réalisée sous forme amorphe au niveau macrostructurel.

13. Pièce selon l'une quelconque des revendications précédentes, **caractérisée en ce qu'**elle présente une zone de surface polie ou rodée, à l'intérieur de laquelle des traces d'usinage causées par le polissage ou le rodage sont visibles.

14. Pièce selon la revendication 13, **caractérisée en ce qu'**au moins un cratère par 5 µm dû à l'usinage par polissage ou rodage est visible.
